# EUROPEAN PATENT SPECIFICATION

(11) **EP 1 515 330 B1**
(45) Date of publication and mention of the grant of the patent: **06.02.2008**
(21) Application number: 04021445.4
(22) Date of filing: 09.09.2004
(51) Int. Cl.: G11B 20/00

(54) **Information protection apparatus**
Vorrichtung zum Schutz einer Information
Dispositif de protection d'une information

(30) Priority: 09.09.2003 JP 2003316428
(43) Date of publication of application: 16.03.2005
(73) Proprietor: Funai Electric Co., Ltd., Daito-shi, Osaka (JP)
(72) Inventor: Tani, Takao, Daito-shi, Osaka (JP)
(74) Representative: Grünecker, Kinkeldey, Stockmair & Schwanhäusser Anwaltssozietät

(56) References cited:
- US-A- 5 594 227
- US-B1- 6 473 861

## Description

### BACKGROUND OF THE INVENTION

### Field of the Invention

The present invention relates to an information protection apparatus for preventing illegal use of information.

### Description of the Related Art

Conventionally, to prevent illegal use of the information, a password is entered in employing the information, or the information is encrypted. Lately, several techniques for preventing improper copy of the contents, such as a CPRM (Contents Protection for Recordable Media) method and a CPPM (Contents Protection for Prerecorded Media) method, have been proposed which involve recording the encoded information of contents in an optical disk such as DVD or CD, and a code (decoding key) required when the information of contents is made composite. In JP-A-2000-163873, a technique for preventing illegal use of the information has been proposed, in which an authentication code of the optical disk is multiply recorded in the entire recording area or a plurality of parts in the recording area, it is confirmed whether the optical disk is proper or illegally copied (the authentication code is recorded) not only at the start of reproduction but also in the course of reproduction, and a process during execution is stopped if it is confirmed that the optical disk is copied.

In order to prevent illegal use of the information with the key code such as decoding key for decoding the password or encoded information, it is required to protect the key code from the person who tries to use the information illegally (hereinafter referred to as an illegal user) (to prevent the key code from leaking to the illegal user). Also, a typical system for preventing illegal use of the information with the key code is configured to request the user to re-input the key code, if the input key code is not correct (if the correct key code is not input) . With this configuration, when the normal user authorized for the use of information inputs a false key code, the user is made to recognize that the previously input key code is false and the key code is input smoothly.

On the other hand, the illegal user may input a different key code repeatedly till a proper key code is input to make the exhaustive search for the key code, and acquire the key code illegally. And in the exhaustive search for the key code, it is unnecessary to take human resources by executing a program (hereinafter referred to as an exhaustive search program) in which if the re-input of the key code is requested, another key code is input. Thus, the number of digits of the key code is increased to keep the security of information, thereby spending a lot of time (about several tens years) till the key code is acquired by the exhaustive search program.

However, along with the higher processing speed of the recent information processing apparatus, the time required to make the exhaustive search of the key code is shorter, resulting in a problem that the security of information against the illegal use is gradually lowered.

Prior art document US-A-5 594 227 discloses a system and method for protecting unauthorized access to data contents, wherein input of a password is checked and, in the case of mismatch, a delay period preceding further input trials is exponentially increased with each trial, until the number of password matches equals the number of mismatches. Consequently, if a user has repeatedly input incorrect passwords, access to data contents will only be granted after repeated input of the correct password, whereby the delay between input prompts is further increased.

An object of the invention is to provide an information protection apparatus for preventing the security of information against the illegal use from being degraded due to higher processing speed of an information processing apparatus, more particularly to prevent illegal data access by an exhaustive search program that repeatedly retries to enter an unknown key code, and at the same time, to avoid annoying time delays during manual input by a normal user.

This problem is solved with the apparatus having the features of claim 1.»

### BRIEF DESCRIPTION OF THE DRAWINGS

The above objects and advantages of the present invention will become more apparent by describing a preferred exemplary embodiment thereof in detail with reference to the accompanying drawings, wherein:
Fig. 1 is a block diagram showing a functional configuration of an information protection apparatus according to an embodiment of this invention; and
Fig. 2 is a flowchart showing the operation of the information protection apparatus according to the embodiment of this invention.

### DETAILED DESCRIPTION OF THE PREFERRED EMBODIMENTS

An information protection apparatus according to an embodiment of the present invention will be described below.

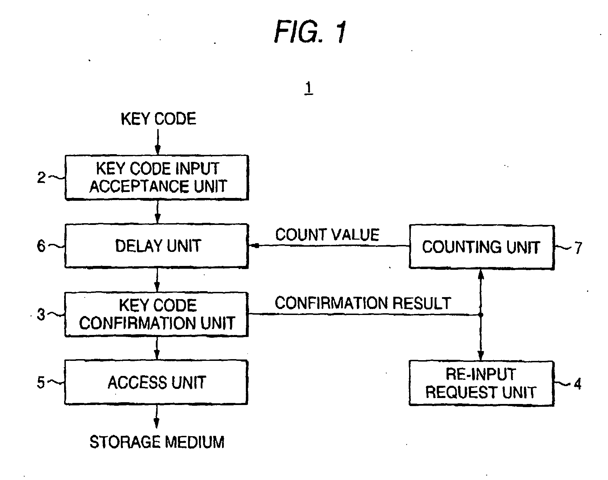

Fig. 1 is a block diagram showing a functional configuration of the information protection apparatus according to the embodiment. The information protection apparatus 1 includes a key code acceptance unit 2 for accepting a key code such as a key (decoding key) for decoding a password or the encrypted information, a key code confirmation unit 3 for confirming whether or not the key code accepted by the key code confirmation unit 2 is correct, a re-input request unit 4 for issuing a request for the key code to be re-input, when the key code confirmation unit 3 confirms that the key code is not correct, an access unit 5 for accessing the information stored in a storage medium (not shown) when the key code confirmation unit 3 confirms that the key code is correct, a delay unit 6 for delaying the key code accepted by the key code acceptance unit 2 to be confirmed in the key code confirmation unit 3, and a count unit 7 for counting the number that the key code confirmation unit 5 confirms the input key code to be not correct.

The key code acceptance unit 2 may accept the key code by the operation of an input device such as a keyboard connected, or accept the key code transmitted from another apparatus via a network such as LAN or the Internet. The key code confirmation unit 3 confirms whether or not the key code accepted by the key code acceptance unit 2 is correct. For example, when the key code is the password, the input key code is collated with the registered key code, in which it is confirmed that the key code is correct, if they are matched, or not correct, if they are unmatched. Also, when the key code is the key for decoding the encrypted information, it is confirmed that the key code is correct, if the encrypted information is decoded by the input key code, or not correct, if it is not decoded. The re-input request unit 4 displays a request for re-input of the key code on a display unit connected to the main body, or transmits it via the network to the apparatus that has transmitted the key code when it is confirmed that the input key code is not correct. The access unit 5 accesses the storage medium such as a hard disk, DVD or CD storing the information, to read, record (or update) or delete the information. The count unit 7 counts the number that the key code confirmation unit 3 confirms the accepted key code to be not correct. The delay unit 7 delays the timing of the key code confirmation unit 3 confirming whether or not the presently accepted key code is correct by adjusting the timing of passing the key code accepted by the key code acceptance unit 2 to the key code confirmation unit 3. Also, the delay unit 7 has a timer for measuring the time elapsed since it is confirmed that the key code accepted lastly is correct. Also, the delay unit 7 measures the time for which the key code accepted by the key code acceptance unit 2 is passed to the key code confirmation unit 3, using this timer.

The information protection apparatus 1 of the embodiment is applied to various kinds of apparatus, including a server connected to the LAN or the Internet, a personal computer, and a DVD apparatus.

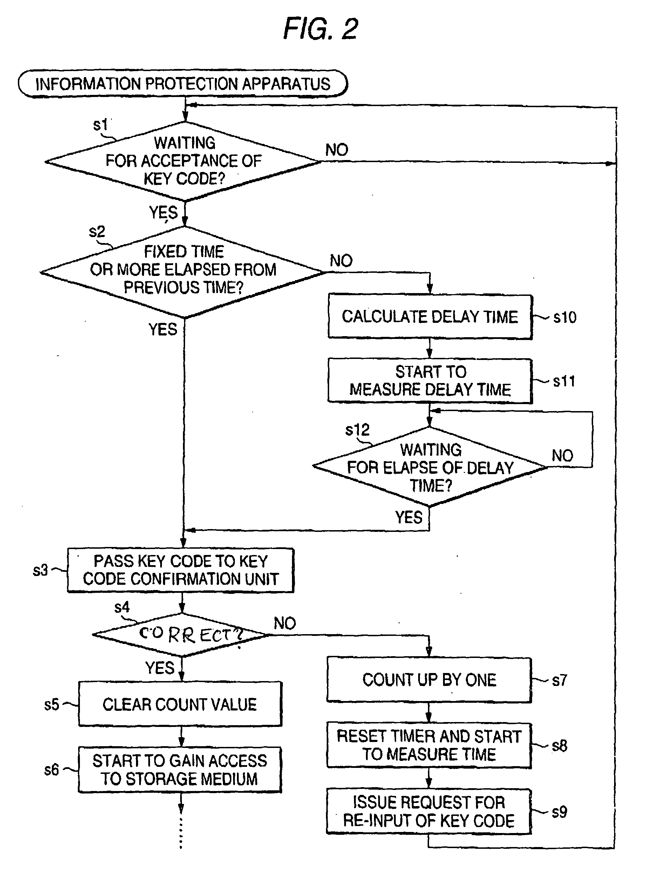

The operation of the information protection apparatus 1 according to the embodiment will be described below. Fig. 2 is a flowchart showing the operation of the information protection apparatus according to the embodiment. In the information protection apparatus 1, if a key code is accepted in the key code acceptance unit 2 (s1), the key code is passed to the delay unit 6. If the key code is passed from the key code acceptance unit 2 to the delay unit 6, it is checked whether or not a fixed time or more, for example, 1 to 2 seconds has elapsed since it is confirmed whether or not the lastly or previously accepted key code is correct (s2). This fixed time is required to judge whether or not the key code is manually input by the user, because a certain length of time is possibly taken to manually input the key code. In other words, when the re-input of the key code is requested, the time is a length of time required to determine whether or not the key code is input by an exhaustive search program for key code to input another key code. The delay unit 6 resets the timer, when the key code confirmation unit 3 confirms whether or not the previously accepted key code is correct, and starts the timer to measure the time taken for determination at s2.

In the information protection apparatus 1, if it is determined that the fixed time or more has elapsed at s2 (the key code is manually input by the user), the delay unit 6 promptly passes the key code from the key code acceptance unit 2 to the key code confirmation unit 3 (s3) . The user who manually inputs the key code is considered to be the normal user. If the key code is passed from the delay unit 6, the key code confirmation unit 3 confirms whether or not the passed key code is correct (s4). A processing at s4 involves collating the key code (password) with the registered password, when the key code is the password, and if they are matched, it is determined that the key code is correct. On the contrary, if they are unmatched, it is determined that the key code is not correct. Also, when the key code is the key for decoding the encrypted information, the encrypted information is decoded by this key code. If the encrypted information is decoded, it is determined that the key code is correct. On the contrary, if the encrypted information is not decoded, it is determined that the key code is not correct.

In the information protection apparatus 1, if it is determined that the key code input at s4 is correct, the count value of the counting unit 7 is cleared (s5), and the access unit 5 starts to gain access to the storage medium (s6) . Thereafter, the information is employed by the user.

On the contrary, in the information protection apparatus 1, if it is confirmed at s4 that the key code is not correct, the count value of the counting unit 7 is counted up by 1 (s7), and the timer of the delay unit 6 is reset to start to measure the time elapsed since the key code confirmation unit 3 confirms whether or not the key code is correct (s8). Moreover, in the information protection apparatus 1, the re-input request unit 4 issues a request for the re-input of the key code (s9), and the procedure returns to s1.

In this manner, the counting unit 7 counts the consecutive number that the key code accepted by the key code acceptance unit 2 is not correct. Also, the delay unit 6 measures the time used for determination at s2 by resetting the timer at s8.

An instance of determining that the time elapsed since it is confirmed whether or not the key code is correct at the previous time at s2 is not greater than the fixed time will be described.

As described above, it is determined that the fixed time or more has not elapsed at s2, because the manually input key code is not accepted but the key code by the exhaustive search program is accepted. The delay unit 6 calculates the delay time for delaying the confirmation whether or not the presently accepted key code is correct, employing the count value of the counting unit 7 (s10). The delay time calculated at s10 is longer, as the count value of the counting unit 7 is greater. More specifically, the delay unit 6 calculates the delay time T such that T=N X N(s) when the count value of the counting unit 7 is N.

Also, the delay unit 6 resets the timer, and starts to measure the delay time calculated at s10 (s11) . If the time measured by the timer reaches the delay time calculated at s10 (s12), the delay time 6 passes the key code passed from the key code acceptance unit (presently accepted key code) to the key code confirmation unit 3 (s3), and the steps following s4 are performed.

In this manner, in the information protection apparatus 1 of the embodiment, if the key code acceptance unit 2 accepts the not correct key code repeatedly, the delay units delays the confirmation whether or not the accepted key is correct, whereby it is possible to spend a long time to make the exhaustive search for key codes, irrespective of the processing speed of the apparatus executing the exhaustive search program for making the exhaustive search for key codes. Accordingly, the security of the information is prevented from being degraded due to higher processing speed of the information processing apparatus.

Also, it is judged whether the presently accepted key code is input manually or by the exhaustive search program for key codes at s2. If it is considered that the key code is input manually, the delay unit does not delay the confirmation whether or not the presently accepted key code is correct, whereby the operability is not degraded when the normal user mistakes an input operation of the key code. Also, even when the exhaustive search program for making the exhaustive search for key codes is programmed to transmit the new key code after the elapse of the fixed time for use at s2 since the time of accepting the re-input of the key code, it is possible to spend a long time to make the exhaustive search for key codes, because it takes at least the fixed time to confirm whether or not one key code is correct.

Also, since the time for delaying the confirmation whether or not the accepted key code is correct is made longer, as the number of confirming that the key code is not correct is increased, whereby the security of information is further enhanced.

Moreover, when the correct key code is confirmed, the count value of the counting unit 7 counting the number of confirming that the key code is not correct is cleared, whereby the time for the input key code to be confirmed is not extremely longer, even if the user (normal user) inputs the false key code frequently.

The normal user can input the correct key code without inputting the false key code consecutively many times.

According to a first aspect of the invention, there is provided an information protection apparatus including: key code acceptance unit for accepting a key code; key code confirmation unit for confirming whether or not the key code accepted by the key code acceptance unit is correct; and re-input request unit for requesting the key code to be re-input, if the key code confirmation unit confirms that the key code is correct; and a delay unit for delaying the key code confirmation unit to confirm the presently accepted key code for an appropriate time, if the key code confirmation unit confirms that the previously accepted key code is not correct when the key code acceptance unit accepts the key code.

According to the above configuration, if the key code confirmation unit confirms that the previously accepted key code is not correct, delay unit delays the key code confirmation unit to confirm the presently accepted key code for an appropriate time. Therefore, even though the exhaustive search program for inputting another key code when the re-input of the key code is requested, if it is confirmed that the previously accepted key code is not correct, the confirmation for the presently accepted key code is delayed, irrespective of the processing speed of the information processing apparatus (time since requesting the re-input of the key code till accepting another key code) . Thereby, even if the key code is acquired illegally by the exhaustive search for the key code, irrespective of the processing speed of the information processing apparatus for making the exhaustive search for the key code, it takes a lot of time to acquire the key code, thereby preventing the security of information from being degraded due to higher processing speed of the information processing apparatus.

The information protection apparatus may further include a counting unit for counting the number of inputting the key code that is confirmed to be not correct by the key code confirmation unit, and the delay unit may be configured to make longer the time for delaying the key code confirmation unit to confirm the presently accepted key code, as the count value of the counting unit is greater.

According to the above configuration, the time for delaying the confirmation for the presently accepted key code is longer, as the number of confirming that the key code is not correct is greater. Accordingly, when the normal user inputs the key code falsely, the delay time till the re-input key code is confirmed is shorter, and the operability of the normal user is not lowered.

The normal user does not input the key code falsely many times.

The counting unit may configured to clear the count value of the counting unit, when the key code confirmation unit confirms that the key code is correct.

According to the above configuration, since the counter for counting the number of confirming that the key code is not correct is cleared, when it is confirmed that the key code is correct, the confirmation for the key code is delayed by the number of inputting the key code falsely in employing the present information for the normal user. Accordingly, the operability of the normal user is not lowered.

The information protection apparatus may configured to include delay invalidation unit for invalidating the delay unit, if the key code acceptance unit accepts the key code after the elapse of a certain time or more since the key code confirmation unit confirms whether or not the key code is correct.

According to the above configuration, for the key code input after the elapse of a certain time or more since it is confirmed whether or not the previously input key code is correct, the confirmation is promptly made whether or not the key code is correct. It is caused by an erroneous operation of the key or the mistake of the key code that the normal user inputs a false key code, because the user manually inputs the key code. It takes a few seconds (one to two seconds) to manually input the key code. On the other hand, when the exhaustive search program for the key is employed, the time since the re-input of the key code is requested till the new key code is input is about a few ms, depending on the processing speed of the information processing apparatus executing the exhaustive search program. Accordingly, the fixed time is set to approximately one second, for the key code input by the person who manually inputs the key code, namely, the normal user, the confirmation for the presently input key code is not delayed, even if the previous key code is false, whereby the operability of the normal user is not degraded.

Also, even if the exhaustive search program is the program for inputting the new key code the fixed time after accepting the re-input of the key code, the confirmation whether or not one key code is correct consequently takes at least the fixed time. Therefore, even if the key code is acquired illegally by the exhaustive search for the key code, it takes a lot of time to acquire the key code, whereby the security of information is prevented from being lowered due to higher processing speed of the information processing apparatus.

It is preferable to set the fixed time to a minimum time that is required to judge whether or not the key code is manually input.

According to the embodiment described above, it takes a lot of time to make the exhaustive search for the key code, irrespective of the processing speed of the information processing apparatus that executes the exhaustive search program for the key code, whereby the security of information is prevented from being degraded due to higher processing speed of the information processing apparatus.

## Claims

1. An information protection apparatus comprising:
a key code acceptance unit (2) that accepts a key code;
a key code confirmation unit (3) at confirms whether or not the key code accepted by the key code acceptance unit is correct;
a re-input request unit (4) that requests the key code to be re-input, when the key code confirmation unit confirms that the key code is not correct; and
a delay unit (6) that delays the key code confirmation unit to confirm a presently accepted key code for an appropriate time, in a case where the key code confirmation unit confirms that the previously accepted key code is not correct when the key code acceptance unit accepts the key code;
**characterized in that**
in order to judge whether the presently accepted key code is input manually or by an exhaustive search program, a delay invalidation unit invalidates the delay unit, such that the confirmation of the presently input key code is not delayed, if the key code acceptance unit accepts the key code after a fixed time has elapsed, even if the previously accepted key code is not correct when the key code acceptance unit accepts the key code.

2. The information protection apparatus according to claim 1, further comprising a counting unit (7) that counts a number of inputting of the key code that is confirmed not to be correct by the key code confirmation unit,
wherein the delay unit makes longer the time for delaying the key code confirmation unit to confirm the presently accepted key code, as the count value of the counting unit is greater.

3. The information protection apparatus according to claim 2, wherein the counting unit clears the count value of the counting unit, when the key code confirmation unit confirms that the key code is correct.

## Patentansprüche

1. Informationsschutzvorrichtung, die umfasst:
eine Schlüsselcode-Annahmeeinheit (2), die einen Schlüsselcode annimmt;
eine Schlüsselcode-Bestätigungseinheit (3), die bestätigt, ob der von der Schlüsselcode-Annahmeeinheit angenommene Schlüsselcode korrekt ist oder nicht;
eine Aufforderungseinheit zur Eingabewiederholung (4), die dazu auffordert, den Schlüsselcode erneut einzugeben, wenn die Schlüsselcode-Bestätigungseinheit bestätigt, dass der Schlüsselcode nicht korrekt ist; und
eine Verzögerungseinheit (6), die die Schlüsselcode-Bestätigungseinheit zur Bestätigung eines gerade angenommenen Schlüsselcodes für eine geeignete Zeitspanne verzögert, falls die Schlüsselcode-Bestätigungseinheit bestätigt, dass der zuvor angenommene Schlüsselcode nicht korrekt ist, wenn die Schlüsselcode-Annahmeeinheit den Schlüsselcode annimmt;
**dadurch gekennzeichnet, dass**
um zu beurteilen, ob der gerade angenommene Schlüsselcode manuell oder durch ein Programm zur erschöpfenden Suche eingegeben wird, eine Verzögerungs-Außerkraftsetzungseinheit die Verzögerungseinheit außer Kraft setzt, so dass die Bestätigung des gerade eingegebenen Schlüsselcodes nicht verzögert wird, wenn die Schlüsselcode-Annahmeeinheit den Schlüsselcode annimmt, nachdem eine festgelegte Zeitspanne verstrichen ist, auch wenn der zuvor angenommene Schlüsselcode nicht korrekt ist, wenn die Schlüsselcode-Annahmeeinheit den Schlüsselcode annimmt.

2. Informationsschutzvorrichtung nach Anspruch 1, ferner eine Zähleinheit (7) umfassend, die eine Anzahl von Eingaben des Schlüsselcodes zählt, die von der Schlüsselcode-Bestätigungseinheit als nicht korrekt bestätigt wurden, wobei die Verzögerungseinheit die Zeitspanne der Verzögerung der Schlüsselcode-Bestätigungseinheit zur Bestätigung des gerade angenommen Schlüsselcodes verlängert, wenn der Zählwert der Zähleinheit größer ist.

3. Informationsschutzvorrichtung nach Anspruch 2, **dadurch gekennzeichnet, dass** die Zähleinheit den Zählwert der Zähleinheit löscht, wenn die Schlüsselcode-Bestätigungseinheit bestätigt, dass der Schlüsselcode korrekt ist.

## Revendications

1. Dispositif de protection d'informations comprenant :
une unité d'acceptation de code clé (2) qui accepte un code clé,
une unité de confirmation de code clé (3) qui confirme si le code clé accepté par l'unité d'acceptation de code clé est correct ou non,
une unité de demande de nouvelle entrée (4) qui demande que le code clé soit à nouveau entré, lorsque l'unité de confirmation de code clé confirme que le code clé n'est pas correct, et
une unité de retard (6) qui impose un retard à l'unité de confirmation de code clé pour confirmer un code clé actuellement accepté pendant une durée appropriée, dans un cas où l'unité de confirmation de code clé confirme que le code clé précédemment accepté n'est pas correct lorsque l'unité d'acceptation de code clé accepte le code clé,
**caractérisé en ce que**
pour déterminer si le code clé actuellement accepté est appliqué en entrée manuellement ou par un programme de recherche exhaustive, une unité d'invalidation de retard invalide l'unité de retard, de sorte que la confirmation du code clé actuellement entré ne soit pas retardée, si l'unité d'acceptation de code clé accepte le code clé après qu'une durée fixe s'est écoulée, même si le code clé précédemment accepté n'est pas correct lorsque l'unité d'acceptation de code clé accepte le code clé.

2. Dispositif de protection d'informations selon la revendication 1, comprenant en outre une unité de comptage (7) qui compte un nombre d'entrées du code clé qui est confirmé comme n'étant pas correct par l'unité de confirmation de code clé,
dans lequel l'unité de retard rend plus longue la durée pour imposer un retard à l'unité de confirmation de code clé pour confirmer le code clé actuellement accepté, lorsque la valeur de comptage de l'unité de comptage est supérieure.

3. Dispositif de protection d'informations selon la revendication 2, dans lequel l'unité de comptage efface la valeur de comptage de l'unité de comptage, lorsque l'unité de confirmation de code clé confirme que le code clé est correct.
